(19) Europäisches Patentamt
European Patent Office
Office européen des brevets

(11) **EP 4 011 945 A1**

(12) **EUROPEAN PATENT APPLICATION**

(43) Date of publication:
**15.06.2022 Bulletin 2022/24**

(21) Application number: **20213890.5**

(22) Date of filing: **14.12.2020**

(51) International Patent Classification (IPC):
*C08J 9/14* (2006.01)     *C08G 18/09* (2006.01)
*C08G 18/76* (2006.01)    *B32B 15/04* (2006.01)
*B32B 15/20* (2006.01)    *C08G 18/40* (2006.01)
*C08G 18/42* (2006.01)    *C08G 18/48* (2006.01)
*C08G 18/50* (2006.01)

(52) Cooperative Patent Classification (CPC):
**C08G 18/7664; B32B 5/20; B32B 15/046;
B32B 15/20; C08G 18/092; C08G 18/4018;
C08G 18/4213; C08G 18/4829; C08G 18/5033;
C08J 9/144; C08J 9/146;** B32B 2250/40;
B32B 2266/0278; B32B 2307/304; B32B 2307/746;
(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG
51373 Leverkusen (DE)**

(72) Inventor: **The designation of the inventor has not
yet been filed**

(74) Representative: **Levpat
c/o Covestro AG
Gebäude 4825
51365 Leverkusen (DE)**

(54) **COMPOSITION FOR FORMING POLYISOCYANURATE FOAM, POLYISOCYANURATE FOAM, AND THERMAL INSULATING MATERIAL**

(57)     Provided is a composition for forming a polyisocyanurate foam having excellent surface quality of a formed article, particularly, a polyisocyanurate foam having excellent smoothness.

The invention is a composition for forming a polyisocyanurate foam, the composition comprising: a polymer having a hydroxy group; a polyisocyanate; and a foaming agent, in which the foaming agent comprises a hydrofluoroolefin; the polymer having a hydroxy group contains a polyester alcohol, and a polyether polyol having a hydroxyl value of 350 to 700 mgKOH/g and obtained by adding propylene oxide to a trifunctional polyol as a starting substance; the amount of the polyester alcohol is 15 parts by mass or more relative to 100 parts by mass of the composition; and the amount of the polyether polyol is 0.2 to 5 parts by mass relative to 100 parts by mass of the composition.

EP 4 011 945 A1

(52) Cooperative Patent Classification (CPC): (Cont.)
B32B 2419/00; C08G 2110/0025;
C08G 2110/0033; C08G 2115/02;
C08J 2203/162; C08J 2375/04

**Description**

Technical Field

The present invention relates to a composition for forming a polyisocyanurate foam, a polyisocyanurate foam formed from the composition, and a thermal insulating material comprising the foam. More specifically, the present invention relates to a composition for forming a polyisocyanurate foam having excellent surface quality of a formed article, in particular, a polyisocyanurate foam having excellent smoothness.

Background Art

Among resin-based foams, polyurethane foams, in particular, a rigid polyurethane foam has been widely used as a foaming thermal insulating material due to its excellent thermal insulating property. Polyurethane foams are usually produced by mixing a polyol and a polyisocyanate together with a catalyst, a foaming agent, a foam stabilizer, or the like appropriately blended as necessary to cause foaming.

Among polyurethane foams, a resin-based foam called "polyisocyanurate foam" has been known. A polyisocyanate used for formation of a foam can generate an isocyanurate ring via its trimerization reaction. A resin-based foam having an isocyanurate ring structure in a certain proportion or more may be referred to as "polyisocyanurate foam" distinguished from general polyurethane foams. The polyisocyanurate foam contains many isocyanurate ring structures, and thus has high flame retardancy.

JP 2014-530282 A (Patent Literature 1) describes an invention related to a polyester-polyether polyol for obtaining a polyurethane product and a polyisocyanurate product, which is suitable for mixing with another polyol or another material mutually compatible with polyester polyol. Specifically, the invention described in Patent Literature 1 is a polyester-polyether polyol produced by 1) a step of mixing an alcohol having a nominal functional value of 3 and a molecular weight of 90 to 500 and phthalic anhydride under the condition of formation of a phthalic anhydride half ester; and 2) a step of alkoxylating the half ester formed in the step 1 to form a polyester-polyether polyol having a hydroxy number of 200 to 350, where when the alcohol is polyether polyol, the polyether polyol contains at least 70 wt.% of polyoxypropylene. Patent Literature 1 describes that use of such a polyester-polyether polyol allows a polyol mixture to exhibit favorable compatibility with a hydrocarbon-based foaming agent and also allows the resulting foam to have a favorable strength.

JP 2004-224967 A (Patent Literature 2) describes an invention related to a production method of a half-rigid or soft polyurethane foam formed article having an integral skin layer on the surface thereof. The invention described in Patent Literature 2 is a method for producing a polyurethane foam formed article, the method comprising injecting a reactive stock solution composition prepared by mixing a polyol composition containing at least a polyol compound, a crosslinking agent, a catalyst, and a foaming agent, and a polyisocyanate component into a mold to form a formed body having integral skin, in which 100 parts by weight of the polyol compound contains 70 to 95 parts by weight of a difunctional polyol compound having a molecular weight of 500 to 4,000 and 30 to 5 parts by weight of a multifunctional polyol of three-or more functional polyol, the foaming agent is water, and the formed body has a surface rigidity measured with an Asker C durometer of 45 degrees or less. Patent Literature 2 describes that a polyol composition, which contains water as a foaming agent, has high viscosity and thus there has been need to use a high-pressure foaming machine. Patent Literature 2 describes that, according to the invention described in Patent Literature 2, use of a specific polyol mixture allows formation using a low-pressure foaming machine of an existing facility without updating to a production facility to the high-pressure foaming machine, and it is possible to provide a method for producing a polyurethane foam formed article having integral skin, which does not cause problems such as odor even in a case of using the polyurethane foam formed article for furniture and the like used in the room.

Conventionally, as a foaming agent for a rigid polyurethane foam or a polyisocyanurate foam, hydrofluorocarbon (HFC)-based foaming agents such as HFC-134a, HFC-245fa, and HFC-365mfc have been used. However, although these hydrofluorocarbon-based foaming agents are recognized as being alternative fluorocarbon which causes less or no ozone layer depletion, hydrofluorocarbon-based foaming agents, which are chemically stable, have high global warming potential. Thus, there is a concern that use of the HFC-based foaming agent leads to global warming, and a reduction in the HFC-based foaming agent has been stepwisely proceeded by the Montreal Protocol (Kigali revision).

In light of these circumstances, halogenated hydroolefin-based foaming agents, called a hydrofluoroolefin (HFO), which have low global warming potential due to their chemically unstable property, are beginning to be used recently in place of these HFC-based foaming agents.

Citation List

Patent Literature

Patent Literature 1: JP 2014-530282 A
Patent Literature 2: JP 2004-224967 A

Summary of Invention

Technical Problem

The present inventors studied use of a hydrofluoroolefin (HFO) as a foaming agent for a polyisocyanurate foam, and found that, in a case where a polyisocyanurate foam and a surface material are integrally formed, the smoothness of the surface material of the resulting formed article is inferior to a case of another foaming agent, leading to a problem of deterioration of the surface quality.

Thus, an object of the present invention is to solve the above problem of the conventional art, and provide a composition for forming a polyisocyanurate foam having excellent surface quality of a formed article, in particular, a polyisocyanurate foam having excellent smoothness. Further, another object of the present invention is to provide a polyisocyanurate foam formed form the composition, and a thermal insulating material comprising the foam.

Solution to Problem

The present inventors confirm that use of a hydrofluoroolefin (HFO) as a foaming agent causes shrinkage of a polyisocyanurate foam, and consider that such shrinkage tends to deteriorate the smoothness of the surface material.

A process of forming a polyisocyanurate foam generally includes (1) foaming via a reaction of a polyisocyanate and water; (2) forming a urethane bond via a reaction of a polyisocyanate and a polyol; and (3) forming an isocyanurate ring via a trimerization reaction of a polyisocyanate, and the reactions start in this order. In a case of using an HFO as a foaming agent, the HFO volatiles through the foaming in above (1) before gas bubbles are generated, thus causing shrinkage of the polyisocyanurate foam.

In light of the above, the present inventors made diligent studies to achieve the above object, and found that a polyisocyanurate foam having excellent smoothness of a surface material can be formed by using a hydroxy group-containing polymer containing a polyester alcohol and a specific polyether polyol in a specific amount, in a composition for forming a polyisocyanurate foam containing an HFO as a foaming agent, and thus accomplished the present invention.

That is, the composition of the present invention is a composition for forming a polyisocyanurate foam, the composition comprising: a polymer having a hydroxy group; a polyisocyanate; and a foaming agent, in which the foaming agent comprises a hydrofluoroolefin; the polymer having a hydroxy group comprises a polyester alcohol, and a polyether polyol having a hydroxyl value of 350 to 700 mgKOH/g and obtained by adding propylene oxide to a trifunctional polyol as a starting substance; the amount of the polyester alcohol is 15 parts by mass or more relative to 100 parts by mass of the composition; and the amount of the polyether polyol is 0.2 to 5 parts by mass relative to 100 parts by mass of the composition.

In a preferred example of the composition of the present invention, the composition has an isocyanate index of 250 or more.

In another preferred example of the composition of the present invention, the viscosity of the polymer having a hydroxy group contained in the composition is 2,500 mPas (25°C) or more.

Further, the polyisocyanurate foam of the present invention is a polyisocyanurate foam formed by foaming the composition.

In a preferred example of the polyisocyanurate foam of the present invention, the polyisocyanurate foam is a polyisocyanurate foam with a surface material.

Further, the thermal insulating material of the present invention is a thermal insulating material comprising the polyisocyanurate foam.

Advantageous Effects of Invention

According to the composition of the present invention, it is possible to provide a composition for forming a polyisocyanurate foam having excellent surface quality of a formed article, in particular, a polyisocyanurate foam having excellent smoothness. According to the polyisocyanurate foam of the present invention, it is possible to provide a polyisocyanurate foam formed from such a composition. According to the thermal insulating material of the present invention, it is possible to provide a thermal insulating material comprising such a polyisocyanurate foam.

Description of Embodiments

Hereinafter, the present invention will be described in detail.

One aspect of the present invention is a composition for forming a polyisocyanurate foam. The polyisocyanurate foam is a resin-based foam obtained from a polyol and a polyisocyanate similarly to a polyurethane foam, and contains a polymer having a urethane bond. Meanwhile, the polyisocyanurate foam contains many isocyanurate ring structures, and thus is distinguished from the polyurethane foam. An isocyanurate ring generated via a trimerization reaction of a polyisocyanate is bonded to a polymer having a urethane bond. A part of the isocyanurate ring may be present in the polyisocyanurate foam as a trimer itself which is not bonded to the polymer having a urethane bond. A resin constituting a polyurethane foam is referred to as "urethane resin", whereas a resin constituting a polyisocyanurate foam is also referred to as "polyisocyanurate resin".

In the present specification, the polyisocyanurate foam refers to a polyisocyanurate foam that has an isocyanate index of 150 or more, and is formed by using a trimerization catalyst.

The composition for forming a polyisocyanurate foam of the present invention contains a polyol, a polyisocyanate, and a foaming agent. Mixing of these components promotes a reaction of the polyol and polyisocyanate, thus enabling formation of a polyisocyanurate foam. In the present specification, the composition for forming a polyisocyanurate foam of the present invention is also referred to as "composition of the present invention".

The composition of the present invention contains a polymer having a hydroxy group. Here, the polymer contains a polyol, and may also contain a polymer having one hydroxy group. For example, when monocarboxylic acid or monoalcohol is used as a raw material in preparation of polyester polyol, the resulting polyester polyol includes a polyester polymer having one hydroxy group. In the present specification, such a polymer is also referred to as "polyester alcohol" considering that a polymer having one hydroxy group can be contained as described above.

The polyol is a compound having a plurality of hydroxy groups, and is preferably a polymeric polyol. Specific examples of the polyol include a polyether polyol, a polyester polyol, a polycarbonate polyol, a polylactone polyol, a polybutadiene polyol, a polymer polyol, and a Mannich polyol.

In the composition of the present invention, the amount of the polymer having a hydroxy group is appropriately adjusted depending on the amount of the polyisocyanate. For example, the amount of the polymer having a hydroxy group is 20 to 35 parts by mass relative to 100 parts by mass of the composition. The polymer having a hydroxy group may be used alone, or two or more types thereof may be used in combination.

Representative examples of the polyether polyol include polyoxyalkylene polyols. The polyoxyalkylene polyol can be produced by subjecting, for example, a compound having two or more active hydrogen-containing groups such as hydroxy groups, primary amino groups, secondary amino groups, and other active hydrogen-containing groups, as a starting raw material, to a ring-opening addition reaction with an alkylene oxide.

Example of the starting raw material of the polyoxyalkylene polyol include polyhydric alcohols such as ethylene glycol, diethylene glycol, propylene glycol, dipropylene glycol, 1,4-butanediol, 1,6-hexanediol, neopentyl glycol, glycerin, trimethylol propane, pentaerythritol, diglycerin, mannose, sucrose, fructose, dextrose, and sorbitol; alkanolamines such as ethanolamine, diethanolamine, triethanolamine, and methyldiethanolamine; polyvalent amines such as ethylenediamine, tolylenediamine, diethyltoluenediamine, 1,3-propanediamine, 1,6-hexanediamine, isophoronediamine, diethylenetriamine, and triethylenepentaamine; polyhydric phenols such as bisphenol A, bisphenol F, resorcinol, and hydroquinone; and modified products thereof. These starting raw materials may be used alone, or two or more types thereof may be used in combination.

Examples of the alkylene oxide to cause a ring-opening addition reaction in the production of the polyoxyalkylene polyol include ethylene oxide, propylene oxide, 1,2-butylene oxide, 2,3-butylene oxide, and styrene oxide. These alkylene oxides may be used alone, or two or more types of thereof may be used in combination.

Examples of the polymer polyol include polymer polyols in which polymer fine particles such as polyacrylonitrile fine particles and polystyrene fine particles are dispersed in a polyoxyalkylene polyol. The polymer polyol includes a polyoxyalkylene polyol, and thus is one type of polyether polyol.

The Mannich polyol can be produced by subjecting phenols, aldehydes, alkanolamines, or the like to a condensation reaction, and, as necessary, further performing a ring-opening addition reaction of an alkylene oxide such as ethylene oxide and propylene oxide. The Mannich polyol has a plurality of ether bonds in the molecule, and thus is one type of polyether polyol.

Preferred examples of the polyether polyol include polyoxyalkylene polyols such as (di)ethylene-based glycol polyether polyol, (di)propylene glycol-based polyether polyol, (di)glycerin-based polyether polyol, trimethylolpropane-based polyether polyol, pentaerythritol-based polyether polyol, sucrose-based polyether polyol, dextrose-based polyether polyol, sorbitol-based polyether polyol, mono(di, tri)ethanolamine-based polyether polyol, ethylenediamine-based polyether polyol, triethylenediamine-based polyether polyol, and bisphenol A-based polyether polyol which are obtained via an addition reaction of ethylene oxide and/or propylene oxide; polymer polyols in which polymer fine particles are dispersed in a polyoxyalkylene polyol, and a Mannich polyol.

The polyester polyol can be produced by adjusting the production condition of a polyester. Examples of the polyester polyol include a polyester polyol having a hydroxy group at least both terminals in the main chain. More specific examples of the polyester polyol include a straight-chain polyester polyol and a polyester polyol slightly branched. The polyester polyol can be prepared by using an aliphatic, alicyclic, or aromatic dicarboxylic acid, a diol, an optional polyvalent carboxylic acid and/or a trifunctional or more polyol by a known method.

The polylactone polyol is a homopolymer or a copolymer of lactone, and examples of the polylactone polyol include a polylactone having a hydroxy group at at least both terminals in the main chain. Specifically, the polylactone polyol can be produced by using, as a starting raw material, for example, a compound having two or more active hydrogen-containing groups as described in the above polyoxyalkylene polyol, and subjecting a lactone such as ε-caprolactone, β-butyrolactone, γ-butyrolactone, γ-valerolactone, δ-valerolactone to a ring-opening addition reaction. The polylactone polyol has a plurality of ester bonds in the molecule, and thus is one type of polyester polyol.

The polycarbonate polyol can be produced by adjusting the production condition of a polycarbonate. Examples of the polycarbonate polyol include a polycarbonate having a hydroxy group at least both terminals in the main chain. Further, examples of the polybutadiene polyol include a polybutadiene having a hydroxy group at least both terminals in the main chain.

In the composition of the present invention, the polymer having a hydroxy group contains a polyester alcohol. In the present specification, "polyester alcohol" refers to a polyester polyol that can contain a polyester having one hydroxy group. The polyester alcohol has excellent combustibility and can provide a polyisocyanurate foam suitable for thermal insulating materials.

The amount of the polyester alcohol is preferably 15 parts by mass or more, more preferably 15 to 30 parts by mass, and even more preferably 20 to 30 parts by mass relative to 100 parts by mass of the composition of the present invention. Use of the polyester alcohol in the above specific amount can ensure excellent combustibility. Further, use of the polyester alcohol in the above specific amount also allows control of the timing of volatilization of the HFO with a balance between a relatively hydrophobic polyester alcohol and a hydrophilic trifunctional polyether having a high hydroxy group, which is preferable.

The hydroxyl value of the polyester alcohol is preferably 150 to 500 mgKOH/g, and more preferably 150 to 300 mgKOH/g. The molecular weight of the polyester alcohol is preferably 200 to 800 g/mol, and more preferably 230 to 750 g/mol. The number of functional groups of the polyester alcohol is preferably 1 to 4, and more preferably 1.3 to 2.5.

In the present specification, the hydroxyl value refers to the number of mg of potassium hydroxide required for neutralization of free hydroxyl groups that have been completely acetylated with carboxylic anhydride (for example, acetic anhydride or phthalic anhydride) in 1 g of a sample (see, JIS K 1557 2007).

In the present specification, the molecular weight of the polymer having a hydroxy group or polyol is the number average molecular weight measured by gel permeation chromatography in terms of polystyrene.

In the present specification, the number of functional groups (fn) of the polymer having a hydroxy group or polyol is determined from the hydroxyl value (OHV) and the number average molecular weight (Mn) of the polymer having a hydroxy group by the following calculation formula.

$$fn = Mn(g/mol) \times OHV(mgKOH/g)/56100$$

In the composition of the present invention, the polymer having a hydroxy group may contain a polyester polyol having an acid group such as a carboxyl group. An acidic moiety of such a polyester polyol can retard a reaction of a polyol and a polyisocyanate, but makes the level of reactivity of the polyol and polyisocyanate approximately the same, thus enabling an increase in the amount of the trimerization catalyst. This can promote a nurate-formation reaction (formation of an isocyanurate ring).

In the composition of the present invention, the polymer having a hydroxy group contains a polyether polyol having a hydroxyl value of 350 to 700 mgKOH/g and obtained by adding propylene oxide to a trifunctional polyol as a starting substance. In the present specification, this polyether polyol is also referred to as "polyether polyol (a)" for the sake of convenience.

The polyether polyol (a) is a trifunctional polyether polyol having a high hydroxyl value, and has hydrophilic properties which are easily dissolved in water due to its structure. Two hydroxy groups out of three hydroxy groups react in the initial stage in the reaction with a polyisocyanate, but the remaining one hydroxy group reacts a little late due to its conformation. As the reaction proceeds, the polyether polyol (a) forms a hydrophobic structure. However, the one remaining hydroxy group, which does not react, can maintain a hydrophilic structure until a somewhat later stage.

Meanwhile, the hydrofluoroolefin (HFO) as a foaming agent is hydrophobic, and thus moves to the hydrophobic side in the process of the reaction of the polyol and polyisocyanate. The HFO also volatiles with a gradual increase in the reaction heat. However, a large number of hydrophobic structures such as polyester alcohol causes the HFO to be dissolved well, and thus the HFO instantly volatiles with a certain reaction heat. The instant volatilization of the HFO softens a resin at a specific site due to high solubility of the HFO in the resin. Such softness of resin presumably causes shrinkage of the foam, and thus deteriorates the smoothness of the surface of the surface material.

Here, the polyether polyol (a) can maintain a hydrophilic structure until a somewhat later stage as described above, and thus can control dissolving of the HFO in a resin obtained from a raw material containing a hydrophobic polyester alcohol in a predetermined amount or more. Thus, the polyether polyol (a) can solve the problem of softness of resin at a specific site.

The amount of the polyether polyol (a) is preferably 0.2 to 5 parts by mass, and more preferably 0.5 to 3 parts by mass relative to 100 parts by mass of the composition of the present invention. An excessive amount of the polyether polyol (a) tends to result in occurrence of wrinkles on the surface of the foam.

The hydroxyl value of the polyether polyol (a) is 350 to 700 mgKOH/g, preferably 400 to 650 mgKOH/g, and more preferably 450 to 600 mgKOH/g. The molecular weight of the polyether polyol (a) is, for example, 200 to 500 g/mol, preferably 250 to 450 g/mol, and more preferably 280 to 400 g/mol.

Examples of the trifunctional polyol which is the starting substance of the polyether polyol (a) include glycerin and trimethylolpropan.

The viscosity of the polymer having a hydroxy group contained in the composition of the present invention is preferably 2,500 mPas (25°C) or more, more preferably 2,500 to 5,000 mPas (25°C), and even more preferably 2,500 to 4,000 mPas (25°C). The viscosity of the polymer having a hydroxy group can be easily increased by, for example, using an aromatic amine-based polyether polyol.

In the present specification, the measurement of the viscosity is performed in accordance with JIS K 7117-1:1999, and a Brookfield rotational viscometer (B-type) is used.

The viscosity of the polymer having a hydroxy group contained in the composition of the present invention refers to the viscosity of the entire polymer having a hydroxy group. For example, the viscosity can be determined from the viscosity and the mass fraction of each polymer having a hydroxy group.

[Viscosity of polymer having hydroxy group]

In a case where the polymer having a hydroxy group contained in the composition of the present invention is composed of n types of polymers, the viscosities of polymers having a hydroxy group are respectively defined as $V^1$, $V^2, \cdots,$ and $V^n$, and the mass fractions of polymers having a hydroxy group in the entire polymer having a hydroxy group are respectively defined as $W^1$, $W^2, \cdots,$ and $W^n$. The viscosity is determined by the following equation.

$$\text{Viscosity of polymer having hydroxy group} = \exp(W^1 \times \ln(V^1) + W^2 \times \ln(V^2) + \cdots + W^n \times \ln(V^n))$$

The polyisocyanate is a compound having a plurality of isocyanate groups. Examples of the polyisocyanate include aliphatic, alicyclic, aromatic, or aromatic-aliphatic polyisocyanates. The polyisocyanate include modified products of these polyisocyanates. Examples of the modified product of a polyisocyanate include polyisocyanates having a structure such as uretdione, isocyanurate, urethan, urea, allophanate, biuret, carbodiimide, iminooxadiazinedione, oxadiazinetrione, and oxazolidone. As the polyisocyanate, an isocyanate group-containing prepolymer obtained by reacting a polyol and a polyisocyanate may also be used. The polyisocyanate may be used alone, or two or more types thereof may be used in combination.

Among polyisocyanates, examples of the aromatic polyisocyanate include phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, and polymethylene polyphenyl polyisocyanate. Examples of the alicyclic polyisocyanate include cyclohexylene diisocyanate, methylcyclohexylene diisocyanate, isophorone diisocyanate, dicyclohexylmethane diisocyanate, and dimethyldicyclohexylmethane diisocyanate. Examples of the aliphatic polyisocyanate include methylene diisocyanate, ethylene diisocyanate, propylene diisocyanate, tetramethylene diisocyanate, and hexamethylene diisocyanate.

The polyisocyanate preferably has an isocyanate group content of 20 to 40 mass%, and even more preferably 25 to 35 mass%. In the present specification, the isocyanate group content is determined in accordance with JIS K 1603-1:2007.

In the composition of the present invention, the amount of the polyisocyanate can be indicated by, for example, the isocyanate index. In the composition of the present invention, the isocyanate index is adjusted to high from the viewpoint of formation of the polyisocyanurate foam. The isocyanate index is preferably 250 or more, more preferably 250 to 500, and even more preferably 250 to 350.

In the present specification, the isocyanate index is a value obtained by multiplying the ratio of the isocyanate group of the polyisocyanate to the total of active hydrogen, which reacts with the isocyanate group, of the polyol, foaming agent, and the like by 100.

The foaming agent is generally classified into a physical foaming agent and a chemical foaming agent. The foaming agent may be used alone, or two or more types thereof may be used in combination. The physical foaming agent and the chemical foaming agent may be used in combination. The amount of the foaming agent is preferably 0.5 to 15 parts by mass, and more preferably 2.0 to 12 parts by mass relative to 100 parts by mass of the composition of the present invention.

Specific examples of the physical foaming agent include fluorocarbons such as a hydrochlorofluorocarbon (HCFC) and a hydrofluorocarbon (HFC); hydrofluoroolefin (HFO), hydrocarbons such as heptane, hexane, pentane, and cyclopentane, and carbon dioxide. Meanwhile, examples of the chemical foaming agent include water, and carboxylic acids such as formic acid, and acetic acid.

The composition of the present invention contains hydrofluoroolefin as a foaming agent. The hydrofluoroolefin (HFO) is a foaming agent suitably used as a physical foaming agent that does not correspond to fluorocarbons. The HFO is an olefin compound containing a fluorine atom, and includes an HFO further containing a halogen atom other than the fluorine atom (for example, a chlorine atom). Among the HFOs, an HFO further containing a chlorine atom is also referred to as "hydrochlorofluoroolefin (HCFO)". The composition of the present invention preferably contains a hydrochlorofluoroolefin. Note that the HFO and the HCFO are distinguished in some cases, but in the present specification, the HFO includes the HCFO as described above.

The number of carbon atoms of the hydrofluoroolefin is preferably 2 to 5. The number of fluorine atoms of the hydrofluoroolefin is preferably 3 to 7. The molecular weight of the HFO is preferably 100 to 200 g/mol. Specific examples of the HFO include 1,2,3,3,3-pentafluoropropene, 1,3,3,3-tetrafluoropropene, 2,3,3,3-tetrafluoropropene, 1,2,3,3-tetrafluoropropene, 3,3,3-trifluoropropene, 1,1,1,4,4,4-hexafluorobutene, 1-chloro-3,3,3-trifluoropropene, 2-chloro-3,3,3-trifluoropropene, 3,3-dichloro-3-fluoropropene, 2-chloro-1,1,1,4,4,4-hexafluorobutene, and 2-chloro-1,1,1,3,4,4,4-heptafluorobutene. The HFO may be any of a cis-isomer and a trans-isomer. These HFOs may be used alone, or two or more types thereof may be used in combination.

The amount of the hydrofluoroolefin is, for example, 0.5 to 15 parts by mass, and preferably 2 to 12 parts by mass relative to 100 parts by mass of the composition of the present invention.

The composition of the present invention preferably contains water as a foaming agent from the viewpoint of improving the appearance and strength of the foam. The amount of the water is, for example, 0.2 to 10 parts by mass, and preferably 0.5 to 2 parts by mass relative to 100 parts by mass of the composition of the present invention.

The composition of the present invention preferably contains a catalyst. Examples of the catalyst include a catalyst for promoting a reaction of water and a polyisocyanate (foaming catalyst), a catalyst for promoting a reaction of a polyol and a polyisocyanate (resinification catalyst), and a catalyst for promoting a trimerization reaction of a polyisocyanate (i.e., formation of an isocyanurate ring) (trimerization catalyst). The composition of the present invention is a composition for forming a polyisocyanurate foam, and thus contains at least a trimerization catalyst.

Examples of the foaming catalyst include dimorpholine-2,2-diethylether, N,N,N',N",N"-pentamethyldiethylenetriamine, bis(dimethylaminoethyl)ether, 2-(2-diethylaminoethoxy)ethanol, and N,N,N'-trimethyl-N'-hydroxyethyl-bisaminoethyl ether.

Examples of the resinification catalyst include amine catalysts such as triethylenediamine, N,N-dimethylcyclohexylamine, N,N,N',N'-tetramethylethylenediamine, N,N,N',N",N"',N"'-hexamethyltriethylenetetramine, N-dimethylaminoethyl-N'-methylpiperazine, N,N,N',N'-tetramethylhexamethylenediamine, 1,2-dimethylimidazole, 1-isobutyl-2-methylimidazole, N,N-dimethylaminopropylamine, and bis(dimethylaminopropyl)amine; alkanol amine catalysts such as N,N-dimethylaminoethanol, N,N,N'-trimethylaminoethylethanolamine, N-(3-dimethylaminopropyl)-N,N-diisopropanolamine, N-(2-hydroxyethyl)-N'-methylpiperazine, N,N-dimethylaminohexanol, and 5-dimethylamino-3-methyl-1-pentanol; and metal catalysts such as stannous octanoate, stannic dibutyl dilaurate, lead octylate, bismuth carboxylate, and a zirconium complex. As these amine catalysts and alkanolamine catalysts, amine carbonates synthesized by adding carbonic acid, and amine carboxylic acid salts synthesized by adding carboxylic acid such as formic acid, and acetic acid may be used.

Examples of the trimerization catalyst include aromatic compounds such as 2,4,6-tris(dialkylaminoalkyl)hexahydro-S-triazine, 1,3,5-tris(N,N-dimethylaminopropyl)hexahydro-S-triazine, 2,4,6-tris(dimethylaminomethyl)phenol, and 2,4-bis(dimethylaminomethyl)phenol; carboxylic acid alkali metal salts such as potassium acetate, potassium 2-ethylhexanoate, and potassium octylate; and quaternary ammonium salts of carboxylic acid or other onium salts.

The amount of the catalyst is, for example, 0.1 to 5 parts by mass, and preferably 0.2 to 3 parts by mass relative to 100 parts by mass of the composition of the present invention. The catalyst may be used alone, or two or more types thereof may be used in combination.

The composition of the present invention may contain a foam stabilizer. The foam stabilizer is preferably a surfactant. The surfactant includes ionic surfactants such as an anionic surfactant, a cationic surfactant, and an amphoteric surfactant; and nonionic surfactants. The surfactant is preferably a nonionic surfactant. Preferred specific examples of the surfactant include silicone-based surfactants and fluorine-based surfactants. The amount of the foam stabilizer is preferably 1 to 5 parts by mass relative to 100 parts by mass of the composition of the present invention. The foam stabilizer may be used alone, or two or more types thereof may be used in combination.

The composition of the present invention may contain a flame retardant. The flame retardant is preferably a phosphorus-based flame retardant. Preferred specific examples of the phosphorus-based flame retardant include tricresyl phosphate (TCP), triethyl phosphate (TEP), tris(β-chloroethyl)phosphate (TCEP), and tris(β-chloropropyl)phosphate (TCPP). Further, solid (powder) flame retardants such as ammonium polyphosphate and amorphous phosphorus are used as necessary. The amount of the flame retardant is preferably 3 to 15 parts by mass relative to 100 parts by mass of the composition of the present invention. The flame retardant may be used alone, or two or more types thereof may be used in combination.

The composition of the present invention may appropriately contain, as other components, additives such as a coloring agent, a filler, an antioxidant, an ultraviolet absorbent, a thermal stabilizer, a photostabilizer, a plasticizer, an antifungal agent, an antibacterial agent, a crosslinking agent, a solvent, a viscosity reducing agent, a pressure reducing agent, and a separation preventing agent, as necessary. Commercially available products can be suitably used for these components.

The composition of the present invention can be prepared by mixing various components appropriately selected as necessary. For example, the composition of the present invention can be prepared by mixing a polyol component containing a polymer having a hydroxy group and a polyisocyanate component composed of a polyisocyanate.

The composition of the present invention is constituted by a stock solution containing a pair of a polyol component and a polyisocyanate component in many cases. The polyol component contains a polymer having a hydroxy group, and usually contains a foaming agent, a foam stabilizer, a catalyst. The polyol component may further contain a flame retardant or an additional additive. The polyisocyanate component is composed of a polyisocyanate, and may also contain additives such as a foaming agent and a flame retardant. The foaming agent may be compounded during mixing of the polyol component and the polyisocyanate component.

Another aspect of the present invention is a polyisocyanurate foam. The polyisocyanurate foam of the present invention is obtained by foaming the composition for forming a polyisocyanurate foam described above. The composition of the present invention contains a polyol and a polyisocyanate. Thus, mixing of both components promotes reaction, thus enabling formation of a polyisocyanurate foam. The temperature at the time of forming the polyisocyanurate foam is preferably 20 to 80°C.

The method for foaming the polyisocyanurate foam is not particularly limited, and known foaming means, for example, hand mixing foaming, simple foaming, an injection method, a froth injection method, and a spraying method can be utilized. The method for forming a polyurethane foam is not particularly limited, and known forming means such as mold forming, slab forming, laminate forming, and on-site foam forming can be utilized.

The polyisocyanurate foam of the present invention can be suitably used for various applications such as marine vessels, vehicles, plants, thermal insulating devices, building, civil engineering, furniture, and interior decorations. The polyisocyanurate foam of the present invention can be used for thermal insulating materials, specifically, thermal insulating devices, for example, thermal insulating members of cold storage warehouses and freezing storage warehouses.

The polyisocyanurate foam of the present invention is preferably a polyisocyanurate foam with a surface material, and even more preferably a polyisocyanurate foam with a metal surface material. In the present specification, the polyisocyanurate foam with a surface material is a plate-shaped composite material in which a surface material such as a foil or a plate is attached to one surface or both surfaces of a polyisocyanurate foam. The polyisocyanurate foam with a surface material can be used as a thermal insulating material for various applications.

Preferred examples of an adherend such as a surface material include metals and other inorganic materials. In particular, examples of the adherend include aluminum and alloys thereof, stainless steel and alloys thereof, iron and alloys thereof, and copper and alloys thereof. For the surface of the adherend, a surface to which the composition of the present invention is attached may be subjected to coating as desired. Examples of the coating include organic polymer coating agents such as polyester resin. The thickness of the adherend is preferably 0.2 to 0.6 mm.

The density of the polyisocyanurate foam of the present invention is, for example, 5 to 80 kg/m$^3$, preferably 25 to 70kg/m$^3$, and even more preferably 40 to 65 kg/m$^3$. In the present specification, the density of the polyisocyanurate foam is measured in accordance with JIS K 7222:2005.

In the polyisocyanurate foam of the present invention, in a case where the central temperature in the measurement is 23°C, the thermal conductivity is preferably 0.0185 to 0.0280 W/m·K, and even more preferably 0.0190 to 0.0260 W/m·K. In the present specification, the thermal conductivity is measured in accordance with JIS A 1412-2:1999.

The polyisocyanurate foam of the present invention can exhibit excellent flame retardancy. In the present specification, "excellent flame retardancy" means that the total heat release as measured by the heat release test method (cone calorimeter method) of ISO 5660 is 8 MJ/m$^2$ or less.

In a case where the polyisocyanurate foam of the present invention is measured by the heat release test method (cone calorimeter method) of ISO 5660, the total heat release is preferably 8 MJ/m$^2$ or less, and even more preferably 7 MJ/m$^2$ or less, the maximum heat release rate is preferably 150 kw/m$^2$ or less, and even more preferably 60 kw/m$^2$ or less, and the heating loss is preferably 50 wt.% or less, and even more preferably 20 wt.% or less.

In the present specification, the measurement method by the heat release test method (cone calorimeter method) of ISO 5660 is according to the method described in Examples described later.

The polyisocyanurate foam of the present invention has excellent flame retardancy, and thus can be applied to various applications that require flame retardancy.

In particular, the flame-retardant polyisocyanurate foam of the present invention can be advantageously utilized as building materials and thermal insulating materials used for multiple dwelling houses such as apartments, detached houses, various facilities including school building and commercial building, pipe arrangement in the factory, automobiles, and railway vehicles.

Further, the polyisocyanurate foam of the present invention can also be used in the production of on-site fabrication type thermal insulating materials and dew condensation preventing materials used by a spraying method, and building materials such as a panel and a board in the factory line.

According to a preferred aspect, provided is a thermal insulating material comprising the flame-retardant polyisocyanurate foam of the present invention.

According to another preferred aspect, provided is a building material comprising the flame-retardant polyisocyanurate foam of the present invention.

Another aspect of the present invention is a thermal insulating material. The thermal insulating material of the present invention is a thermal insulating material comprising the polyisocyanurate foam of the present invention described above. Examples of the thermal insulating material include thermal insulating members, for example, thermal insulating devices of cold storage warehouses and freezing storage warehouses. The thermal insulating material of the present invention can be used for multiple dwelling houses such as apartments, detached houses, various facilities including school building and commercial building, freezing storage warehouses, bathtubs, pipe arrangement in the factory, automobiles, and railway vehicles.

## Examples

Hereinafter, the present invention will be further described in detail with reference to Examples. However, the present invention is not limited to the following Examples.

1. Outline

A mixed solution prepared by mixing a polymer having a hydroxy group, a foaming agent, and the like (polyol component) and a polyisocyanate are mixed at a predetermined compounding ratio, and then injected into a mold including metal surface materials disposed on the top and bottom of the mold at a constant temperature and pressure by using a high-pressure foaming machine, thus preparing a polyisocyanurate foam. The depth of a part around the injection portion of the lower surface of the polyisocyanurate foam after a lapse of a predetermined time is measured.

2. Apparatus and device

High-pressure foaming machine (HK-650P, available from Hennecke)
Disposable chopsticks
Stopwatch (having a function of measuring a lap time)
Mold (made of aluminum, inside dimensions: length: 2,000 mm, width: 900 mm, thickness: 100 mm)

3. Materials

1) Polymer having hydroxy group

Polyester alcohol A: polyester alcohol [PHANTOL 6301: available from Showa Denko Materials Co., Ltd.], number of functional groups: 1.7, hydroxyl value: 250 mgKOH/g, viscosity: 2,500 mPa·s (25°C)
Polyol B: polyester polyol [Maximol RFK-505: available from Kawasaki Kasei Chemicals Ltd.], number of functional groups: 2.0, hydroxyl value: 250 mgKOH/g, viscosity: 5,300 mPa·s (25°C)

Polyol C: aromatic amine-based polyether polyol [SBU polyol Z450: available from Sumika Covestro Urethane Co., Ltd.], number of functional groups: 4, hydroxyl value: 340 mgKOH/g, viscosity: 12,000 mPa·s (25°C)

Polyol D: polyether polyol [SBU polyol S429: available from Sumika Covestro Urethane Co., Ltd.], number of functional groups: 3, hydroxyl value: 250 mgKOH/g, viscosity: 230 mPa·s (25°C)

Polyol E: polyether polyol [MULTRANOL 9158: available from Sumika Covestro Urethane Co., Ltd.], number of functional groups: 3, hydroxyl value: 470 mgKOH/g, viscosity: 450 mPa·s (25°C)

Polyol F: polyether polyol [SUMIPHEN TM: available from Sumika Covestro Urethane Co., Ltd.], number of functional groups: 3, hydroxyl value: 370 mgKOH/g, viscosity: 600 mPa·s (25°C)

Polyol G: polyether polyol [SUMIPHEN VO: available from Sumika Covestro Urethane Co., Ltd.], number of functional groups: 3, hydroxyl value 550 mgKOH/g, viscosity: 1,600 mPa·s (25°C)

Polyol H: polyester polyol [Maximol RAK-253: available from Kawasaki Kasei Chemicals Ltd.], number of functional groups: 2, hydroxyl value: 360 mgKOH/g, viscosity: 3,200 mPa·s (25°C), acid value: 180 mgKOH/g

2) Polyisocyanate

Polyisocyanate: Polymeric MDI [SUMIDULE 44V20 L: available from Sumika Covestro Urethane Co., Ltd.], isocyanate group content: 31.5 mass%

3) Foaming agent

Foaming agent A: water
Foaming agent B: HCFO-1233zd (molecular weight: 130)
Foaming agent C: HFO-1224yd (molecular weight: 148.5)
Foaming agent D: HFO-1336mzz (Z)(molecular weight: 164)

4) Other additives

Catalyst A: dimorpholine-2,2-diethylether
Catalyst B: 1,2-dimethylimidazole (70 mass%) + diethylene glycol (30 mass%)
Catalyst C: potassium octylate
Catalyst D: onium salt solution

Foam stabilizer: silicone-based nonionic surfactant [TEGOSTAB B8460: available from Evonik Japan Co., Ltd.]
Flame retardant: tris(2-chloroisopropyl)phosphate

5) Surface material

Aluminum surface material

3. Method

<Preparation of polyol component>

1) Predetermined amounts of various polyols and catalysts and the like are introduced into a mixing tank purged with nitrogen and then mixed.
2) The contents are stirred for 30 minutes or more, and whether the contents have been sufficiently stirred is visually confirmed.
3) A predetermined amount of a foaming agent is added to the mixed solution confirmed in 2), and then the contents are sufficiently mixed. After the mixing, a foaming agent that has been weighed and reduced in amount is added, and the contents are mixed again.

Tables 1 and 2 show the formulation of polyol components (parts by mass)

<Production of polyisocyanurate foam>

4) Using a high-pressure foaming machine HK-650P, available from Hennecke, the temperatures of polyol components and polyisocyanate components were adjusted to 19 to 23°C, and urethane injection forming was then performed at an injection pressure of 12 MPa. Tables 1 and 2 show the mixing mass ratio of the polyol components and the polyisocyanate components.

5) A composition for forming a foam is injected into the center portion of a mold that has been heated to 55°C in advance and includes aluminum surface materials disposed on the top and bottom of the mold (inside dimensions: length: 2,000 mm, width: 900 mm, thickness: 100 mm).

6) The composition is injected in an amount such that the mold is not fully filled with the polyisocyanurate foam in the lengthwise direction of the mold. Semicircular both ends of the polyisocyanurate foam are cut off, thus sampling a rectangular parallelepiped. The weight and volume of the sample are measured, and the just density ($kg/m^3$) is calculated. The density of the sample filled in the mold refers to a just density.

7) The just weight of the mold (inside dimensions: length: 2,000 mm, width: 900 mm, thickness: 100 mm) is calculated from the just density. The composition is injected in an amount 1.25 times the calculated just weight, thus producing a polyisocyanurate foam formed article.

8) 30 minutes after injection of the composition for forming a foam, a polyisocyanurate foam formed article with a surface material is released from the mold.

9) After the polyisocyanurate foam is released, the polyisocyanurate foam is left to stand at 0°C within 30 minutes, and then left approximately 24 hours.

10) A linear scale is placed so as to be a right angle on the surface material on the lower surface side in which urethane has been injected. The maximum value of the gap between the linear scale and the surface material is measured by using a thickness gauge (Niigata Seiki Co., Ltd., 100ML) or a taper gauge (Niigata Seiki Co., Ltd., 270A). Tables 1 and 2 show the obtained results as "maximum recession of the injection lower surface".

11) An image of a fluorescent lamp reflected on the surface material of the lower surface side under the fluorescent lamp (straight tube type) was visually observed. The smoothness was evaluated by the following criteria. Tables 1 and 2 show the evaluation results.

(Evaluation criteria)

◎: Surface was smooth, and the image of the fluorescent lamp was observed as a straight line.
○ : Surface was smooth, and the image of the fluorescent lamp was observed as a straight line, but the surface appeared to have a slight recess and protrusion.
×: Surface was not smooth, and weaving of the image of the fluorescent lamp was observed.

<Measurement method of gelling time>

To confirm the reactivity of a composition for forming a foam, a mixed solution in an amount that does not overflow was injected into a 2L DESCUP at a predetermined temperature and pressure, and the mixed solution was touched with disposable chopsticks during injection. The time period until the mixed solution begins to form threads was measured as the gelling time (second). Tables 1 and 2 show the measurement results.

<Evaluation of flame retardancy>

The flame retardancy (total heat release) of the polyisocyanurate foam was measured by the following apparatus under the following conditions in accordance with ISO 5660. Tables 1 and 2 show the evaluation results.
Apparatus: CONE CALORIMETER C4, available from Toyo Seiki Seisaku-sho, Ltd.
Condition: radiant heat: 50 $kW/m^2$
Sample position: 60 mm (distance from a cone heater to a surface material which is a sample surface)
Heating time: 20 minutes
Sample size: 100 × 100 × 40 mm (cut out at a portion including a surface material of a lower surface having no recession at the center portion of the panel)
Panel curing period: 3 days (after forming)
Sample curing period: 1 day (after cutting)
A case where the measured total heat release was 8 $MJ/m^2$ or less was evaluated as having remarkable flame retardancy (flame retardancy ○). A case where the measured total heat release was more than 8 $MJ/m^2$ was evaluated as not having remarkable flame retardancy (flame retardancy ×). Tables 1 and 2 show the evaluation results.

[Table 1]

| | | Comparative Example 1 | Comparative Example 2 | Comparative Example 3 | Example 1 | Example 2 | Example 3 | Example 4 | Example 5 | Example 6 |
|---|---|---|---|---|---|---|---|---|---|---|
| Polyol component | Polyester alcohol A | 58 | 55 | 55 | 56 | 55 | 55 | 55 | 50 | 55 |
| | Polyol B | 26 | 25 | 25 | 26 | 25 | 25 | 25 | 20 | 25 |
| | Polyol C | 16 | 15 | 10 | 16 | 15 | 10 | 5 | 15 | 15 |
| | Polyol D | | 5 | 10 | | | | | | |
| | Polyol E | | | | 2 | 5 | 10 | 15 | 15 | |
| | Polyol F | | | | | | | | | 5 |
| | Polyol G | | | | | | | | | |
| | Foam stabilizer | 5 | 5 | 5 | 5 | 5 | 5 | 5 | 5 | 5 |
| | Flame retardant | 15 | 15 | 15 | 15 | 15 | 15 | 15 | 15 | 15 |
| | Polyol H | 3.5 | 3.5 | 3.5 | 3.5 | 3.5 | 3.5 | 3.5 | 3.5 | 3.5 |
| | Catalyst A | 3 | 3 | 3 | 3 | 3 | 3 | 3 | 3 | 3 |
| | Catalyst B | 0.2 | 0.2 | 0.2 | 0.2 | 0.2 | 0.2 | 0.2 | 0.2 | 0.2 |
| | Catalyst C | 2.5 | 2.5 | 2.5 | 2.5 | 2.5 | 2.5 | 2.5 | 2.5 | 2.5 |
| | Catalyst D | 0.5 | 0.5 | 0.5 | 0.5 | 0.5 | 0.5 | 0.5 | 0.5 | 0.5 |
| | Foaming agent A | 0.6 | 0.6 | 0.6 | 0.6 | 0.6 | 0.6 | 0.6 | 0.6 | 0.6 |
| | Foaming agent B | 34.8 | 34.8 | 34.6 | 35.1 | 35.5 | 35.9 | 36.3 | 36.9 | 35.2 |
| | Foaming agent C | | | | | | | | | |
| | Foaming agent D | | | | | | | | | |
| Polyisocyanate component | Polyisocyanate | 209 | 209 | 206 | 212 | 216 | 220 | 225 | 231 | 213 |
| Isocyanate index | | 280 | 281 | 281 | 280 | 280 | 280 | 281 | 281 | 281 |
| Mixing mass ratio (polyol component/ polyisocyanate component) | | 100/127 | 100/127 | 100/125 | 100/128 | 100/130 | 100/132 | 100/135 | 100/138 | 100/129 |
| Reactivity | Gelling time (second) | 70 to 100 | 70 to 100 | 70 to 100 | 70 to 100 | 70 to 100 | 70 to 100 | 70 to 100 | 70 to 100 | 70 to 100 |

(continued)

| | | Comparative Example 1 | Comparative Example 2 | Comparative Example 3 | Example 1 | Example 2 | Example 3 | Example 4 | Example 5 | Example 6 |
|---|---|---|---|---|---|---|---|---|---|---|
| Flame retardancy | Total heat release (MJ/m2) n = 2 average | 3.7 | 5.6 | 7.4 | 4.3 | 5.3 | 6.4 | 7.5 | 8.6 | 5.5 |
| | Determination (○ or ×) | ○ | ○ | ○ | ○ | ○ | ○ | ○ | × | ○ |
| Maximum recession of injection lower surface (mm) | | 0.20 | 0.30 | 0.25 | 0.10 | 0.05 | <0.03 | <0.03 | 0.03 | 0.10 |
| Smoothness of lower surface | | × | × | × | ○ | ◎ | ◎ | ◎ | ◎ | ○ |
| Content of polyester alcohol in composition (mass%) | | 22.5 | 21.4 | 21.6 | 21.7 | 21.0 | 20.7 | 20.4 | 17.6 | 21.1 |
| Content of polyol D, E, F, or G in composition (mass%) | | 0.0 | 1.3 | 2.7 | 0.5 | 1.3 | 2.6 | 3.8 | 3.8 | 1.3 |
| Viscosity of polymer having hydroxy group (mPa·s/25°C) | | 3880 | 3380 | 2790 | 3750 | 3490 | 2980 | 2540 | 2850 | 3540 |

[Table 2]

| | | Example 7 | Example 8 | Example 9 | Comparative Example 4 | Example 10 | Example 11 | Comparative Example 5 | Example 12 | Example 13 |
|---|---|---|---|---|---|---|---|---|---|---|
| Polyol component | Polyester alcohol A | 55 | 55 | 55 | 58 | 55 | 55 | 58 | 55 | 55 |
| | Polyol B | 25 | 25 | 25 | 26 | 25 | 25 | 26 | 25 | 25 |
| | Polyol C | 10 | 15 | 10 | 16 | 15 | 10 | 16 | 15 | 10 |
| | Polyol D | | | | | | | | | |
| | Polyol E | | | | | 5 | 10 | | 5 | 10 |
| | Polyol F | 10 | | | | | | | | |
| | Polyol G | | 5 | 10 | | | | | | |
| | Foam stabilizer | 5 | 5 | 5 | 5 | 5 | 5 | 5 | 5 | 5 |
| | Flame retardant | 15 | 15 | 15 | 15 | 15 | 15 | 15 | 15 | 15 |
| | Polyol H | 3.5 | 3.5 | 3.5 | 3.5 | 3.5 | 3.5 | 3.5 | 3.5 | 3.5 |
| | Catalyst A | 3 | 3 | 3 | 3 | 3 | 3 | 3 | 3 | 3 |
| | Catalyst B | 0.2 | 0.2 | 0.2 | 0.2 | 0.2 | 0.2 | 0.2 | 0.2 | 0.2 |
| | Catalyst C | 2.5 | 2.5 | 2.5 | 2.5 | 2.5 | 2.5 | 2.5 | 2.5 | 2.5 |
| | Catalyst D | 0.5 | 0.5 | 0.5 | 0.5 | 0.5 | 0.5 | 0.5 | 0.5 | 0.5 |
| | Foaming agent A | 0.6 | 0.6 | 0.6 | 0.6 | 0.6 | 0.6 | 0.6 | 0.6 | 0.6 |
| | Foaming agent B | 35.3 | 35.8 | 36.4 | | | | | | |
| | Foaming agent C | | | | 39.8 | 40.6 | 41 | | | |
| | Foaming agent D | | | | | | | 44 | 44.8 | 45.3 |
| Polyisocyanate component | Polyisocyanate | 214 | 219 | 226 | 209 | 216 | 220 | 209 | 216 | 220 |
| Isocyanate index | | 281 | 281 | 281 | 280 | 280 | 280 | 280 | 280 | 280 |
| Mixing mass ratio (polyol component) component/polyisocyanate | | 100/129 | 100/132 | 100/136 | 100/123 | 100/126 | 100/128 | 100/120 | 100/123 | 100/125 |
| Reactivity | Gelling time (second) | 70 to 100 | 70 to 100 | 70 to 100 | 70 to 100 | 70 to 100 | 70 to 100 | 70 to 100 | 70 to 100 | 70 to 100 |

| | | Example 7 | Example 8 | Example 9 | Comparative Example 4 | Example 10 | Example 11 | Comparative Example 5 | Example 12 | Example 13 |
|---|---|---|---|---|---|---|---|---|---|---|
| Flame retardancy | Total heat release (MJ/m2) n = 2 average | 6.7 | 5.1 | 6.2 | 4.0 | 5.6 | 6.5 | 3.6 | 5.4 | 6.8 |
| | Determination (○ or ×) | ○ | ○ | ○ | ○ | ○ | ○ | ○ | ○ | ○ |
| Maximum recession of injection lower surface (mm) | | 0.07 | <0.03 | <0.03 | 0.18 | 0.05 | <0.03 | 0.16 | 0.04 | <0.03 |
| Smoothness of lower surface | | ○ | ◎ | ◎ | × | ◎ | ◎ | × | ◎ | ◎ |
| Content of polyester alcohol in composition (mass%) | | 21.1 | 20.8 | 20.4 | 22.2 | 20.7 | 20.4 | 21.9 | 20.5 | 20.2 |
| Content of polyol D, E, F, or G in composition (mass%) | | 2.6 | 1.3 | 2.5 | 0.0 | 1.3 | 2.6 | 0.0 | 1.3 | 2.5 |
| Viscosity of polymer having hydroxy group (mPa·s/25°C) | | 3060 | 3710 | 3370 | 3880 | 3490 | 2980 | 3880 | 3490 | 2980 |

EP 4 011 945 A1

Tables 1 and 2 show that polyisocyanurate foams of Examples have excellent surface quality of a formed article compared to Comparative Examples 1 to 5.

**Claims**

1.  A composition for forming a polyisocyanurate foam, the composition comprising:

    a polymer having a hydroxy group;
    a polyisocyanate; and
    a foaming agent, wherein
    the foaming agent comprises a hydrofluoroolefin,
    the polymer having a hydroxy group comprises a polyester alcohol, and a polyether polyol having a hydroxyl value of 350 to 700 mgKOH/g and obtained by adding propylene oxide to a trifunctional polyol as a starting substance,
    the amount of the polyester alcohol is 15 parts by mass or more relative to 100 parts by mass of the composition, and
    the amount of the polyether polyol is 0.2 to 5 parts by mass relative to 100 parts by mass of the composition.

2.  The composition according to claim 1, wherein the composition has an isocyanate index of 250 or more.

3.  The composition according to claim 1 or 2, wherein the viscosity of the polymer having a hydroxy group contained in the composition is 2,500 mPas (25°C) or more.

4.  A polyisocyanurate foam formed by foaming the composition according to any one of claims 1 to 3.

5.  The polyisocyanurate foam according to claim 4, which is a polyisocyanurate foam with a surface material.

6.  A thermal insulating material comprising the polyisocyanurate foam according to claim 4 or 5.

Europäisches
Patentamt

European
Patent Office

Office européen
des brevets

**EUROPEAN SEARCH REPORT**

Application Number

EP 20 21 3890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/105657 A1 (ASAHI GLASS CO LTD [JP]; SHIMIZU KATSUHIKO [JP] ET AL.) 9 August 2012 (2012-08-09) * paragraphs [0221], [0222], [0226], [0227], [0233]; examples 3,4; table 22 * | 1-6 | INV. C08J9/14 C08G18/09 C08G18/76 B32B15/04 B32B15/20 C08G18/40 C08G18/42 C08G18/48 C08G18/50 |
| A | WO 2016/201293 A1 (ICP ADHESIVES AND SEALANTS INC [US]) 15 December 2016 (2016-12-15) * paragraph [0029]; example 3 * | 1-6 | |
| A | US 2019/367770 A1 (BRÜNING DIRK [DE] ET AL) 5 December 2019 (2019-12-05) * examples 5,6 * | 1-6 | |

TECHNICAL FIELDS
SEARCHED     (IPC)

C08J
C08G
B32B

The present search report has been drawn up for all claims

| Place of search | Date of completion of the search | Examiner |
|---|---|---|
| Munich | 10 May 2021 | Lanz, Sandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 3890

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2021

| Patent document cited in search report | Publication date | Patent family member(s) | Publication date |
|---|---|---|---|
| WO 2012105657 A1 | 09-08-2012 | JP 5664669 B2<br>JP WO2012105657 A1<br>WO 2012105657 A1 | 04-02-2015<br>03-07-2014<br>09-08-2012 |
| WO 2016201293 A1 | 15-12-2016 | AU 2016274982 A1<br>CA 2988976 A1<br>EP 3307799 A1<br>WO 2016201293 A1 | 18-01-2018<br>15-12-2016<br>18-04-2018<br>15-12-2016 |
| US 2019367770 A1 | 05-12-2019 | CN 110248980 A<br>EP 3354671 A1<br>EP 3577150 A1<br>US 2019367770 A1<br>WO 2018141721 A1 | 17-09-2019<br>01-08-2018<br>11-12-2019<br>05-12-2019<br>09-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014530282 A

- JP 2004224967 A